# EUROPEAN PATENT SPECIFICATION

(11) **EP 3 998 889 B1**
(45) Date of publication and mention of the grant of the patent: **27.08.2025**
(21) Application number: 19937363.0
(22) Date of filing: 18.07.2019
(51) Int. Cl.: A41D 19/00

(54) **ELASTOMERIC GLOVE AND METHOD OF FABRICATION**
ELASTOMERER HANDSCHUH UND VERFAHREN ZUR HERSTELLUNG
GANT ÉLASTOMÈRE ET SON PROCÉDÉ DE FABRICATION

(43) Date of publication of application: 25.05.2022
(73) Proprietor: Ansell Limited, Richmond, Victoria 3121 (AU)
(72) Inventor: BAGWELL, Alison S., Alpharetta, Georgia 30009 (US); LOW, Hiang Tuan, Kedah, 09600 (MY); ZAKARIA, Zamsari Bin, Perak, 31600 (MY); BERAHENG, Sumsuriya, Pattani, 94170 (TH); MANIYAM, Muruganatham, Eshan, 41200 (MY); GOVINDASAMY, Baskaran, Selangor, 47500 (MY)
(74) Representative: Dehns
(86) International application number: PCT/US2019/042348
(87) International publication number: WO 2021/011004

(56) References cited:
- WO-A1-2019/113627
- AU-A1- 2014 353 859
- CN-U- 202 950 049
- US-A1- 2003 118 837
- US-A1- 2016 160 069
- US-A1- 2017 071 271
- US-A1- 2018 016 409
- US-A1- 2018 332 910
- US-B1- 6 673 404
- US-B1- 6 673 404

## Description

### FIELD

The present disclosure relates generally to elastomeric articles and, more specifically, to thin, triple layer, elastomeric gloves having enhanced chemical resistance and tactile sensitivity.

### BACKGROUND

The development of synthetic rubber materials have made possible the manufacture of a wide variety of elastomeric articles having varying properties of strength and chemical resistance. Among these articles are gloves designed for use in various industries, such as the medical, pharmaceutical, and electrical component manufacturing and handling fields. As safety accessories, the gloves protect a user from environmental hazards such as chemicals or pathogens. Relatively thin and flexible gloves have traditionally been made of natural rubber latex in a dipping process. The donning surface (i.e., the interior) of these gloves may be coated with corn starch, talcum, or lypcopodium powder to lubricate the gloves, making them easier to don. In recent years, powder-free gloves have largely replaced powdered gloves because of changing needs and perceptions of glove consumers. Powders, for example, are often unsuitable for clean rooms such as those used in the manufacture of semiconductors and electronics.

Glove consumers have also been moving away from natural rubber gloves due, in part, to an increasing rate of allergic reactions, and to anxiety of potentially developing allergic reactions, to proteins in natural rubber latex among health professionals as well as the general population. The industry has increasingly moved to latex emulsions based on synthetic rubber materials. While hospitals, laboratories, or other work environments that use rubber gloves often want to go "latex free" to protect workers and to alleviate anxiety, the higher cost of nonlatex products, such as nitrile rubber, often limits their ability to make the change. For example, nitrile rubber gloves may cost two or more times the price of the natural rubber latex or vinyl-based counterparts. This increased cost has often caused purchasers in cost-sensitive environments either to switch to less expensive polyvinyl chloride gloves, or has prevented them from switching to the synthetic materials altogether.

In addition to being more expensive, nitrile-butadiene rubber gloves are typically stiffer and are perceived as being much less comfortable to wear in comparison to similar gloves made from natural rubber latex materials. For instance, natural rubber latex (NRL) gloves typically require a stress of about 2.5 MPa (362.5 psi) to stretch to an elongation of about 300 percent of its original dimensions. This often is referred to as the glove's 300 percent modulus. Nitrile rubber gloves, on the other hand, typically require more than twice that amount of stress (^{~}6-8 MPa, ^{~}870-1160 psi) to achieve the same 300 percent elongation. Thus, donning of nitrile rubber gloves over prolonged periods of time may result in hand fatigue to a user. While polyvinyl chloride medical exam gloves can be inexpensive, polyvinyl chloride medical exam gloves are typically considered a lower performance choice. That is, polyvinyl chloride medical exam gloves are typically stiffer and less elastomeric than even the conventional thicker nitrile rubber medical exam gloves.

Other considerations in the selection of industrial or medical gloves are tactile sensitivity and specific chemical resistance to hazardous materials. For example, many users require gloves that provide a combination of tactile sensitivity that enables them to perform tasks and to use tools with precise dexterity, and of protection from hazardous materials for up to several hours of use. Thicker gloves generally have enhanced chemical resistance and reduced tactile sensitivity, while thinner gloves generally have reduced chemical resistance and enhanced tactile sensitivity.

Thus, there remains a need for a disposable elastomeric glove that is affordable, and that provides enhanced tactile sensitivity and protection to a user.

WO 2019/113627 A1 discloses the preamble of claim 1.

### BRIEF DESCRIPTION

The invention is set out in the appended set of claims.

According to the invention, an elastomeric glove comprises a body-facing layer of a first elastomeric material, a middle layer of a second elastomeric material, and an outer layer of a third elastomeric material different than at least the second elastomeric material. The third elastomeric material has an acrylonitrile content greater than at least the second elastomeric material.

According to the invention, an elastomeric glove comprises a glove body including a cuff region, a finger region, and a palm region. The glove body includes a body-facing layer of an accelerator-free elastomeric material, a middle layer of a natural rubber latex material, and an outer layer of a high acrylonitrile nitrile material. The body-facing layer, the middle layer, and the outer layer of material have a combined thickness of less than about 0.19 millimeters in the palm region of the glove body.

The invention further relates to a method of fabricating said elastomeric glove, the method comprising dipping a hand-shaped former into a first dip tank containing the third elastomeric material such that a first layer of the third elastomeric material is formed on the hand-shaped former; dipping the hand-shaped former into a second dip tank containing the second elastomeric material such that a second layer of the second elastomeric material is formed over the first layer; and dipping the hand-shaped former into a third dip tank containing the first elastomeric material such that a third layer of the first elastomeric material is formed over the second layer. The first elastomeric material has an acrylonitrile content greater than at least the second elastomeric material.

### BRIEF DESCRIPTION OF THE DRAWINGS

FIG. 1 is a perspective view of a suitable embodiment of an elastomeric glove of the present disclosure being donned by a user, the elastomeric glove having a body-facing layer, a middle layer, and an outer layer.
FIG. 2 is a front plan view of the elastomeric glove.
FIG. 3 is a back plan view of the elastomeric glove.
FIG. 4 is a top view of the elastomeric glove.
FIG. 5 is a bottom view of the elastomeric glove.
FIG. 6 is a right side view of the elastomeric glove.
FIG. 7 is a cross-sectional view of the elastomeric glove of FIG. 1 taken along line 7-7.
FIG. 8 is a cross-sectional view of the elastomeric glove of FIG. 1 taken along line 8-8.
FIG. 9 is a cross-sectional view of the elastomeric glove of FIG. 1 taken along line 9-9.
FIG. 10 is a perspective view of the elastomeric glove of FIG. 1 with portions cut away to illustrate the body-facing layer, the middle layer, and the outer layer.
FIG. 11 is an illustration of hand-shaped formers that may be used to fabricate the elastomeric glove of FIG. 1.
FIG. 12 is an illustration of a hand-shaped former of FIG. 11 having a glove formed thereon with portions cut away to illustrate the hand-shaped former, the body-facing layer, the middle layer, and the outer layer being colored to provide a visual contrast.
FIG. 13 is an enlarged, fragmented view of the elastomeric glove illustrating one suitable grip pattern that may be disposed on the outer layer.
FIG. 14 is a schematic diagram illustrating a method of fabricating the elastomeric glove of FIG. 1 according to one embodiment of the disclosure.

### DETAILED DESCRIPTION OF THE DRAWINGS

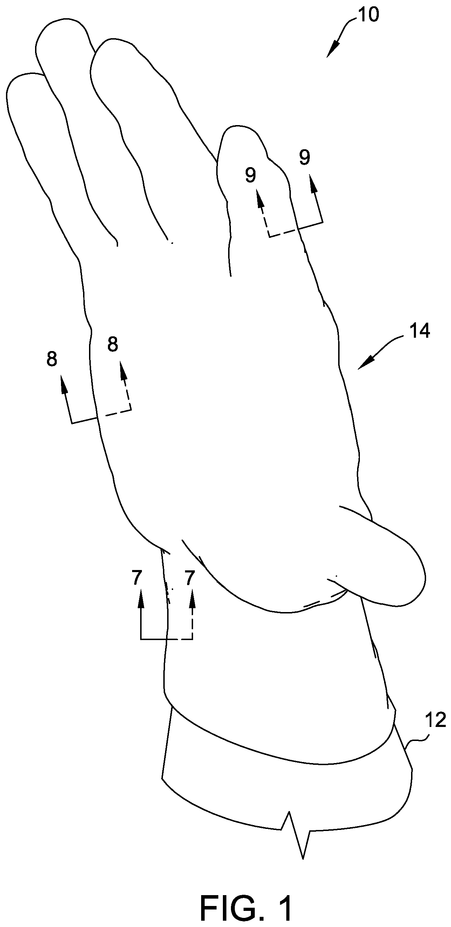

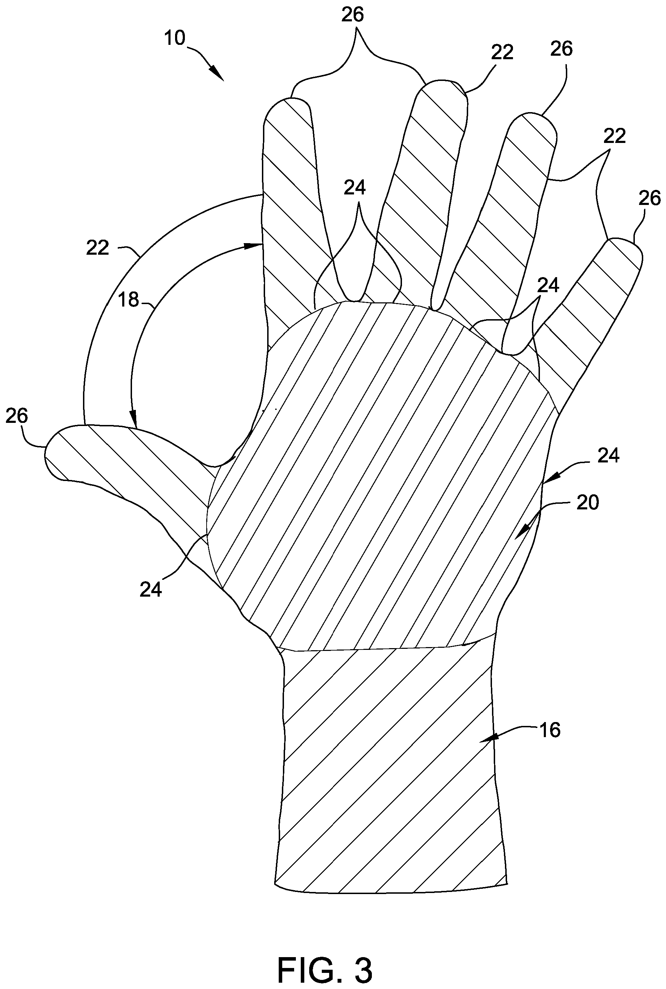

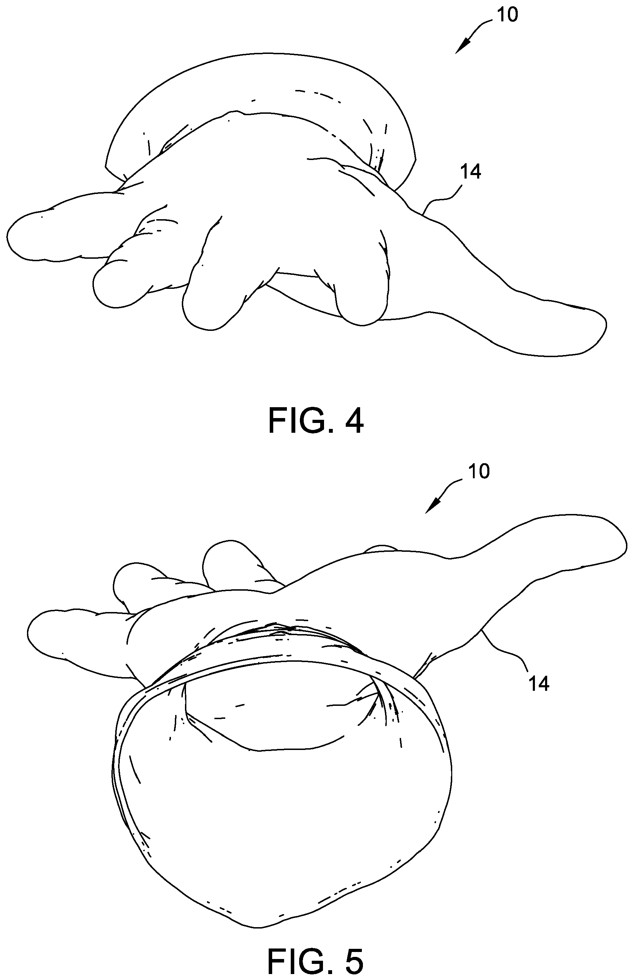

Turning now to the drawings, FIGS. 1-10 illustrate one suitable embodiment of an elastomeric glove, indicated generally at 10, of the present disclosure. The glove 10 seen in FIG. 1 is illustrated being donned by a user 12. The glove 10 includes a glove body 14 having a cuff region 16, a finger region 18, and a palm region 20 located between the cuff region 16 and the finger region 18. The finger region 18 is defined by a plurality of fingers 22, with each of the five fingers 22 having a base 24 and a fingertip 26. As described herein, the palm region 20 includes an area on the glove body 14 extending between the cuff region 16 and the bases 24 of the fingers 22. The glove 10 may be designed to be ambidextrous, or may be designed for left-handed or right-handed use only.

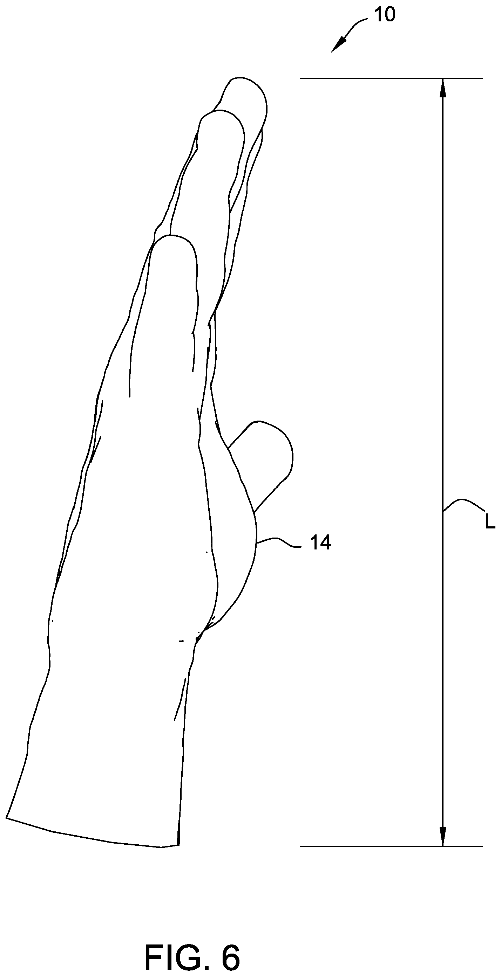

The glove 10 may also have any suitable length L (shown in FIG. 6) based on its intended use. For example, the glove 10 may be intended for use in a medical, dental, pharmaceutical, electrical, or clean room setting. In one suitable embodiment, the length L of the glove 10 is between about 20,3 cm (8 inches) and about 40,6 cm (16 inches), between about 20,3 cm (8 inches) and about 35,6 cm (14 inches), between about 20,3 cm (8 inches) and about 25,4 cm (10 inches), or between about 22, 9 cm (9 inches) and about 25,4 cm (10 inches). In the illustrated embodiment, for example, the length L of the glove 10 is approximately 22,9 cm (9 inches). In other suitable embodiments, the length L of the glove 10 can be equal to or greater than about 40,6 cm (16 inches) without departing from some aspects of the disclosure. In such an embodiment, the length L of the glove body 14 is increased such that the cuff region 16 covers a larger portion of the arm of the user 12 compared to a glove having a shorter length.

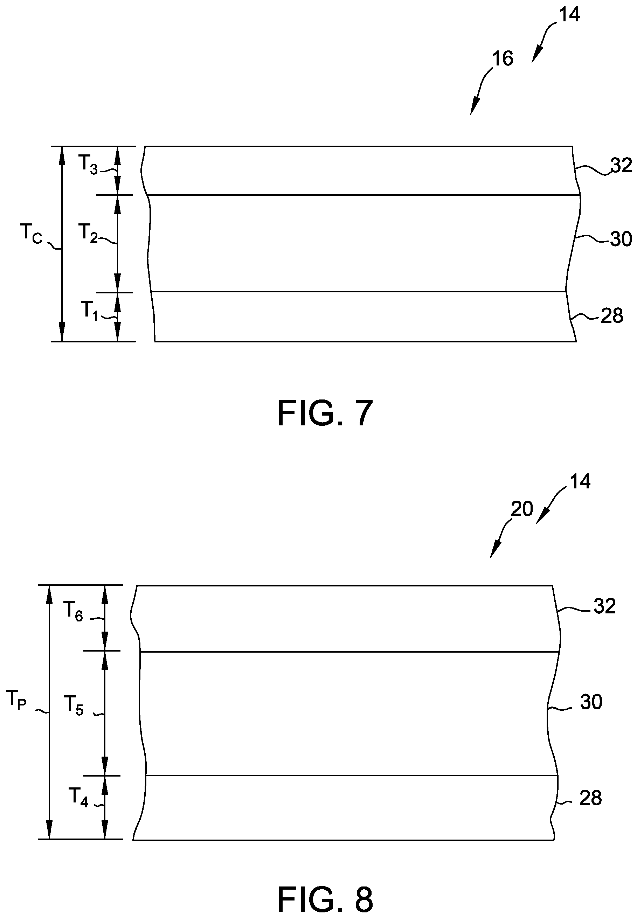

Turning now to FIG. 7, the glove body 14 includes a body-facing layer 28, a middle layer 30, and an outer layer 32. Each layer 28, 30, and 32 is fabricated from any suitable elastomeric material that enables the glove 10 to function as described herein. As used herein, the term "elastomeric material" refers to a material that is stretchable to an elongation of at least about 25 percent of its relaxed length, i.e., can be stretched to at least about one and one-quarter times its relaxed length, and upon release of the stretching force will recover at least about 40 percent of the elongation.

In general, the glove 10 is formed in a dipping process using a series of compositions, such as a coagulant composition and an elastomeric composition, as needed to attain the desired glove characteristics. The layers formed from the compositions may be allowed to solidify before additional layers are formed. Any combination of layers may be used, and although specific layers are described herein, it should be understood that other layers and combinations of layers may be used as desired.

To fabricate the body-facing layer 28, any suitable coagulant composition and elastomeric material may be used that facilitates providing comfort to the user 12, but that does not cause an allergic reaction or contribute to anxiety of potentially developing an allergic reaction of the user 12 donning the glove 10. Thus, the coagulant composition is powder-free, thereby rendering the glove 10 and the body-facing layer 28 likewise powder-free per ASTM D6124 and EN455-3.

In addition, the elastomeric material of the body-facing layer 28 is accelerator-free. Accelerators are compounds sometimes included in a bath of elastomeric material for use in facilitating vulcanization of the elastomeric material. However, the presence of accelerators may cause an adverse reaction in users of articles formed from the elastomeric material including an accelerator. The reaction is commonly referred to as a Type IV allergy, which generally occurs within 6 to 48 hours of contact with the article and that is localized to the area of the skin where contact is made. Preparing a bath of the elastomeric material, for use in fabricating the body-facing layer 28, that is accelerator-free facilitates reducing or substantially eliminating adverse reactions to the user 12 donning the glove 10.

Suitable examples of the elastomeric material used to form the body-facing layer 28 include, but are not limited to, neoprene, nitrile, butyl, elastane, polychloroprene, styrene-butadiene rubber, and polyisoprene. The elastomeric material is devoid of natural rubber latex. As such, the body-facing layer 28 contains less than about 50 micrograms/gram of protein, or less than about 30 micrograms/gram of protein.

To fabricate the middle layer 30, any suitable coagulant composition and elastomeric material may be used that facilitates providing comfort and dexterity to the user 12 donning the glove 10. That is, the elastomeric material is selected such that the middle layer has a 300 percent modulus value less than that of the outer layer 32. As such, the middle layer 30 facilitates increasing the flexibility and perceived comfort of the glove 10. Suitable examples of the elastomeric material used to form the middle layer 30 include, but are not limited to, natural rubber latex, neoprene, nitrile, butyl, elastane, polychloroprene, styrene-butadiene rubber, and polyisoprene.

As illustrated in FIGS. 7-9, the middle layer 30 is encapsulated by the body-facing layer 28 and the outer layer 32. As such, the illustrated configuration enables the middle layer 30 to be fabricated from natural rubber latex so as to provide the desired comfort and dexterity inherent to natural rubber latex without exposing the user 12 to potential allergens.

To fabricate the outer layer 32, any suitable coagulant composition and elastomeric material may be used that facilitates forming a layer that provides physical and chemical protection to the user 12, but that does not cause an allergic reaction or contribute to anxiety of potentially developing an allergic reaction of the user 12 donning the glove 10. Thus, the coagulant composition is powder-free, thereby rendering the glove 10 and the outer layer 32 likewise powder-free per ASTM D6124 and EN455-3. In one suitable embodiment, the elastomeric material is a high acrylonitrile nitrile material. As used herein, "high acrylonitrile nitrile" refers to a polymeric material having an acrylonitrile content greater than 30 percent, defined within a range between 30 percent and 50 percent, defined within a range between about 35 percent and about 45 percent, or defined within a range between about 36 percent and about 42 percent by weight.

The elastomeric material of the outer layer 32 has an acrylonitrile content greater than the elastomeric materials of the body-facing layer 28 and the middle layer 30. It is believed, without being bound by any particular theory, that fabricating the outer layer 32 from high acrylonitrile nitrile material facilitates imparting enhanced chemical resistance properties to the glove 10, as will be described in more detail below. Thus, fabricating only the outer layer 32 from high acrylonitrile nitrile material enables the glove 10 to have specific chemical resistance at a reduced price point.

The remainder of the elastomeric material used to fabricate the outer layer 32 may include polymers such as butadiene, and the like. Polymers with higher levels of acrylonitrile tend to have better resistance to aliphatic oils and solvents, but are also stiffer than polymers that have lower levels of acrylonitrile. Thus, the acrylonitrile content of the elastomeric material is selected to provide a balance of chemical resistance and comfort to the user 12. The elastomeric material is also devoid of natural rubber latex. As such, the outer layer 32 contains less than about 50 micrograms/gram of protein, or less than about 30 micrograms/gram of protein. Thus, the combination and orientation of the body-facing layer 28 and the outer layer 32 relative to the middle layer 30 enables the glove 10 to be considered, and labeled as, "latex safe" or "latex free" in accordance with Federal Drug Administration guidelines.

In view of the above criteria, the glove 10 may be fabricated from any combination of layers that enables the glove 10 to have the desired properties described herein. For example, the outer layer 32 may be fabricated from a different material than both the body-facing layer 28 and the middle layer 30. In one suitable embodiment, for example, the body-facing layer 28 and the middle layer 30 may be fabricated from the same material, and the outer layer 32 fabricated from a different material than the body-facing layer 28 and the middle layer 30. In another suitable embodiment, for example, each of the body-facing layer 28, the middle layer 30, and the outer layer 32 are fabricated from different materials. In an alternative embodiment, the outer layer 32 may be fabricated from the same material as the body-facing layer 28, and from a different material than the middle layer 30.

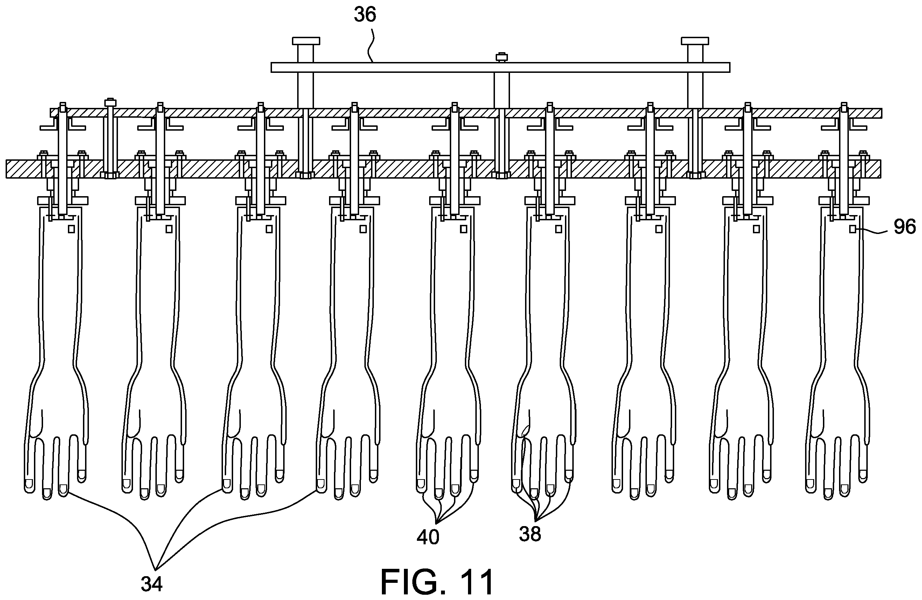

In one suitable embodiment, the glove 10 is fabricated by dipping a mold into a coagulant bath and then a bath containing elastomeric material in multiple (e.g., at least three) iterative process steps. A coagulant composition in the coagulant bath facilitates adhering the elastomeric material to a hand-shaped former 34 (shown in FIG. 11), and facilitates adhering adjacent layers 28, 30, and 32 of elastomeric material to each other.

Referring to FIGS. 7-9, the glove body 14 has a combined thickness T_{C}, T_{P}, and T_{F} in respective regions of the glove 10. It should be understood that the dipping process used to fabricate the glove 10 may result in variations in the thickness T_{C} of the glove 10 in the cuff region 16, the thickness T_{P} of the glove 10 in the palm region 20, and thickness T_{F} of the glove 10 in the finger region 18. That is, the fingertips 40 (shown in FIG. 11) of the hand-shaped former 34 are typically submerged within a particular bath of elastomeric material first, and thus are in contact with the elastomeric material for a greater period of time than the remainder of the hand-shaped former 34.

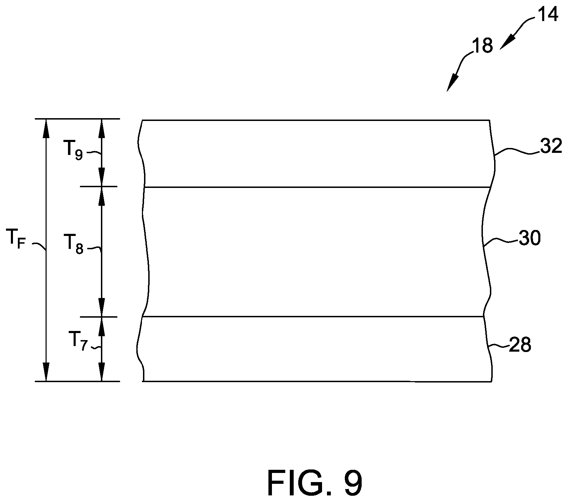

As illustrated in FIG. 7, the thickness T_{C} of the glove 10 in the cuff region 16 is defined as a function of a thickness T₁ of the body-facing layer 28, a thickness T₂ of the middle layer 30, and a thickness T₃ of the outer layer 32. As illustrated in FIG. 8, the thickness T_{P} of the glove 10 in the palm region 20 is defined as a function of a thickness T₄ of the body-facing layer 28, a thickness T₅ of the middle layer 30, and a thickness T₆ of the outer layer 32. As illustrated in FIG. 9, the thickness T_{F} of the glove 10 in the finger region 18 is defined as a function of a thickness T₇ of the body-facing layer 28, a thickness T₈ of the middle layer 30, and a thickness T₉ of the outer layer 32.

The thickness T_{P} as measured in the palm region 20 of the glove body 14 is typically used as the standard for quantifying the feel and tactile sensitivity that may be provided by the glove 10. However, the dipping process should be performed to likewise maintain the thickness T_{C} in the cuff region 16 and the thickness T_{F} the finger region 18 within predefined tolerances. In one suitable embodiment, the thickness T_{P} is defined within a range between about 0.14 millimeters (mm) and less than 0.19 mm. The thickness T_{C} is defined within a range between about 0.10 mm and about 0.18 mm, defined within a range between about 0.12 mm and about 0.16 mm, or defined within a range between about 0.13 mm and about 0.15 mm. The thickness T_{F} as measured in the finger region 18 is defined within a range between about 0.18 mm and about 0.26 mm, defined within a range between about 0.20 mm and about 0.25 mm, or defined within a range between about 0.21 mm and about 0.23 mm. Thus, the glove 10 is fabricated with thicknesses T_{C}, T_{P}, and T_{F} that are selected to provide the user 12 with enhanced tactile sensitivity while donning the glove 10.

In the illustrated embodiments, the middle layer 30 has a greater average thickness than each of the body-facing layer 28 and the outer layer 32 in each of the cuff region 16, the finger region 18, and the palm region 18. That is, the average value of thicknesses T₂, T₅, and T₈ is greater than the average value of thicknesses T₁, T₄, and T₇, and is greater than the average value of thicknesses T₃, T₆, and T₉. As noted above, the middle layer 30 facilitates increasing the flexibility of the glove 10 to provide comfort and dexterity to the user 12 donning the glove 10. As such, fabricating the middle layer 30 to have a greater average thickness than the body-facing layer 28 and the outer layer 32 in each layer 28, 30, and 32 enhances the comfortability of the glove body 14 in view of the comparatively stiff materials used to fabricate the body-facing layer 28 and the outer layer 32.

In one suitable embodiment, the body-facing layer 28 and the outer layer 32 may have the same thicknesses. That is, the average value of thicknesses T₁, T₄, and T₇ is substantially equal to the average value of thicknesses T₃, T₆, and T₉. In another suitable embodiment, the body-facing layer 28 may be thicker than the outer layer 32. That is, the average value of thicknesses T₁, T₄, and T₃ is greater than the average value of thicknesses T₃, T₆, and T₉. In another suitable embodiment, the outer layer 32 may be thicker than the body-facing layer 28. That is, the average value of thicknesses T₃, T₆, and T₉ is greater than the average value of thicknesses T₁, T₄, and T₇.

In the illustrated embodiment, the thicknesses T₁, T₄, and T₇ of the body-facing layer 28 may be equal to or less than about 0.076 mm, defined within a range between about 0.038 mm and about 0.076 mm, or defined within a range between about 0.050 mm and about 0.070 mm. The thicknesses T₂, T₅, and T₈ of the middle layer 30 may be defined within a range between about 0.089 mm and about 0.127 mm, defined within a range between about 0.100 mm and about 0.120 mm, or defined within a range between about 0.100 and about 0.110 mm. The thicknesses T₃, ₆, and T₉ of the outer layer 32 may be equal to or less than about 0.076 mm, defined within a range between about 0.038 mm and about 0.076 mm, or defined within a range between about 0.050 mm and about 0.070 mm.

The glove 10 fabricated in view of the above description has a variety of physical properties. For example, the glove 10 has a tensile strength (before aging) equal to or greater than about 14 MPa, or approximately equal to about 24 MPa per ASTM D412, ASTM D573, and ASTM D6319. The glove 10 has an ultimate elongation (before aging) equal to or greater than about 500 percent, or approximately equal to about 600 percent per ASTM D412, ASTM D573, and ASTM D6319. The glove 10 has a median force at break (before aging) equal to or greater than about 6 Newtons, or approximately equal to about 9 Newtons per ASTM D412 and EN455-2:2015. The glove 10 has a tensile strength (after aging) equal to or greater than about 14 MPa, or approximately equal to about 20 MPa per ASTM D412, ASTM D573, and ASTM D6319. The glove 10 has an ultimate elongation (after aging) equal to or greater than about 400 percent, or approximately equal to about 600 percent per ASTM D412, ASTM D573, and ASTM D6319. The glove 10 has a median force at break (after aging) equal to or greater than about 6 Newtons, or approximately equal to about 9 Newtons per ASTM D412 and EN455-2:2015.

In addition, the glove 10 according to the present disclosure provides protection for handling radioactive and/or hazardous materials, such as hazardous chemicals or biological material. It is believed, without being bound by any particular theory, that the presence of high acrylonitrile nitrile material in the outer layer 32 enhances the chemical resistance of the glove 10 in accordance with the disclosure. When used in combination with the body-facing layer 28 and the middle layer 30, the glove 10 has specific chemical resistance to certain oils, solvents, and hazardous materials not currently met today with other thin elastomeric articles.

For example, the glove 10 has a chemical resistance breakthrough time of greater than about 240 minutes for each of Carmustine, Cycophasphomide, Doxorubicin, Eptoposide, Fluorouracil, Paclitaxel, Cisplatin, Dicarbazine, Ifosfamide, Mitoxantrone, Thoitepa, and Vincristine in accordance with ASTM D6978.

The glove 10 also has a chemical resistance breakthrough time of greater than about 10 minutes, or greater than about 480 minutes, for each of methanol, acetone, acetonitrile, dichloromethane, carbon disulphide, toluene, diethylamine, tetrahydrofuran, ethyl acetate, n-haptane, 40 percent sodium hydroxide, 96 percent sulphuric acid, 65 percent nitric acid, 99 percent acetic acid, 25 percent ammonium hydroxide, 30 percent hydrogen peroxide, 40 percent hydrofluoric acid, and 37 percent formaldehyde in accordance with EN 16523-1. That is, the glove 10 has a chemical performance of at least Class 1 against all 18 chemicals listed in EN ISO 374-1.

The glove 10 also has a chemical resistance breakthrough time of greater than about 120 minutes for each of isopropyl alcohol and dimethyl sulfoxide, and has a chemical resistance breakthrough time of greater than about 480 minutes for hydrochloric acid per EN 16523-1.

The glove 10 also complies with the requirements for the registration of new products with the Korean Occupation Safety & Health Administration (KOSHA). That is, the glove 10 has a chemical resistance breakthrough time of greater than about 30 minutes for at least three chemicals in the following list of chemicals: methanol, acetone, acetonitrile, dichloromethane, carbon disulphide, toluene, diethylamine, tetrahydrofuran, ethyl acetate, n-hexane, 40 percent sodium hydroxide, and 96 percent sulphuric acid. That is, the glove 10 has a chemical performance of at least Class 2 against three of the chemicals listed above.

In addition, the glove 10 achieves at least Class 1 performance for at least one of the testing items listed in Table 1, in accordance with KOSHA requirements.

**TABLE 1**

| | Testing items (unit) | Performance requirement (Class) | | | | | |
|---|---|---|---|---|---|---|---|
| | | 6 | 5 | 4 | 3 | 2 | 1 |
| Quality | Abrasion (cycle) | - | - | >8,000 | >2,000 | >500 | >100 |
| | Cutting resistance (index) | - | >20.0 | >10.0 | >5.0 | >2. 5 | >1.2 |
| | Tearing strength (N) | - | - | >75 | >50 | >25 | >10 |
| | Puncturing resistance strength (N) | - | - | >150 | >100 | >60 | >20 |

In addition, the glove 10 is food contact safe in accordance with BfR Regulations (European Union) and in accordance with US FDA Cfr 177.2600 (North America and Canada), is safe to use with disinfectants, conforms to ESD 1149 for surface resistivity, and conforms to ISO 16604 for viral penetration.

In the illustrated embodiment, the glove 10 is cleanroom approved. For example, the glove 10 has a particle count less than about 950 per square centimeter for particles 0.05 microns or larger per IEST-RP-CC005. In addition, the glove 10 has a calcium ion concentration equal to or less than about 45 micrograms/gram, a chloride ion concentration equal to or less than about 35 micrograms/gram, a magnesium ion concentration equal to or less than about 5 micrograms/gram, a nitrate ion concentration equal to or less than about 15 micrograms/gram, a potassium ion concentration equal to or less than about 5 micrograms/gram, a sodium ion concentration equal to or less than about 10 micrograms/gram, a sulfate ion concentration equal to or less than about 10 micrograms/gram, a zinc ion concentration equal to or less than about 25 micrograms/gram, a ammonium ion concentration equal to or less than about 5 micrograms/gram per IEST-RPCC005.

In some embodiments, the wet and dry gripping ability of the gloves 10 are improved via texturing, for example, as will be described in more detail below. The gripping ability of the gloves 10 is measured using grip tests such as the SATRA TM437 methodology, the SATRA TM438 methodology, and the SATRA 1544 methodology. SATRA TM437 covers finger and thumb 'pinch grip', and SATRA TM438 provides a method of testing 'whole hand grip' (thumb, four fingers and palm).

The SATRA TM437 'pinch-grip test' requires a subject wearing a glove to grip an instrumented, vertically-suspended flat metal bar, and to pull the bar downwards to lift a counterbalanced weight by a set distance. The grip is then relaxed until slippage of the bar against the glove surface is detected, when the wearer must increase the grip to prevent further slippage. The bar is then gently raised to its original, unloaded position. Throughout the test cycle, the grip forces are recorded by means of an electronic load cell within the bar. The wearer's comments on the ease of action and the effectiveness of the grip (which will include a subjective opinion of the security between the glove lining and the wearer's skin, as well as that between the glove outer and the test bar) are also recorded. The results generated are both objective (force data from the load cell within the grip bar) and subjective (user comments on glove performance).

The SATRA TM438 'whole hand grip' test requires the test subject to grip a cylinder, and to pull the cylinder downwards to lift a large counterbalanced weight to a set distance. The grip is then held for a set time before returning the cylinder to the original, unloaded position. If any slippage occurs, the subjects are required, if possible, to maintain grip by applying a higher force. This test gives an indication of how the grip surface across the whole glove performs under realistic working conditions. Again, the results generated are both objective (force data from the load cell within the grip cylinder) and subjective (user comments on glove performance).

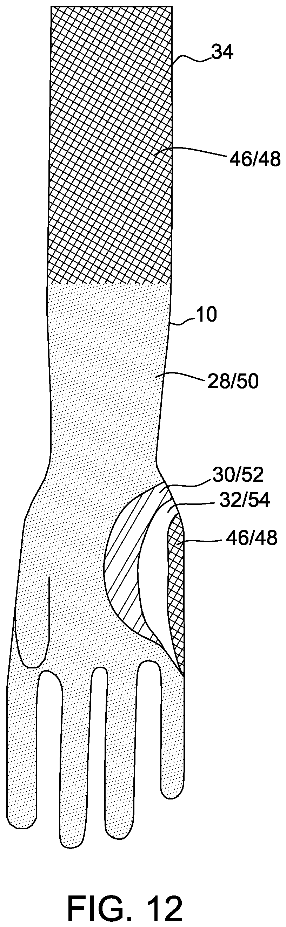

The article of the present invention may be formed using a variety of processes including dipping, for example spraying, tumbling, drying, and curing. As will be described in more detail below, each layer 28, 30, and 32 is formed in a dip process in a series of process steps. For example, referring to FIG. 11, a series of glove molds or hand-shaped formers 34 may be used to form the glove 10 (shown in FIG. 1) of the present disclosure. Referring to FIG. 12, the outer layer 32 is initially formed on the hand-shaped former 34 such that the outer layer 32 is in contact with the hand-shaped former 34. The middle layer 30 and then the body-facing layer 28 are formed on the hand-shaped former 34 over the outer layer 32. The glove 10 is inverted when stripped from the hand-shaped former 34 such that the body-facing layer 28 defines an interior of the glove 10 for receiving the hand and arm of the user 12, and such that the outer layer 32 is exposed to an ambient environment.

The hand-shaped formers 34 shown in FIG. 11 are illustrated on a pallet 36 used in a batch processing operation, but it should be understood that the process of the present disclosure may also be utilized in a continuous operation.

A hand-shaped former 34 may be generally recognized as a contoured mold having a textured or smooth surface which may accept a series of coatings and then release the formed glove 10. Example coating materials include, but are not limited to, calcium stearate, poly vinyl chloride, and poly (methyl methacrylate). The hand-shaped former 34 may be fabricated from any material that enables the process of the present disclosure to function as described herein. For example, the surface of the hand-shaped former 34 may be formed of ceramic, porcelain, glass, metal, or certain fluorocarbons.

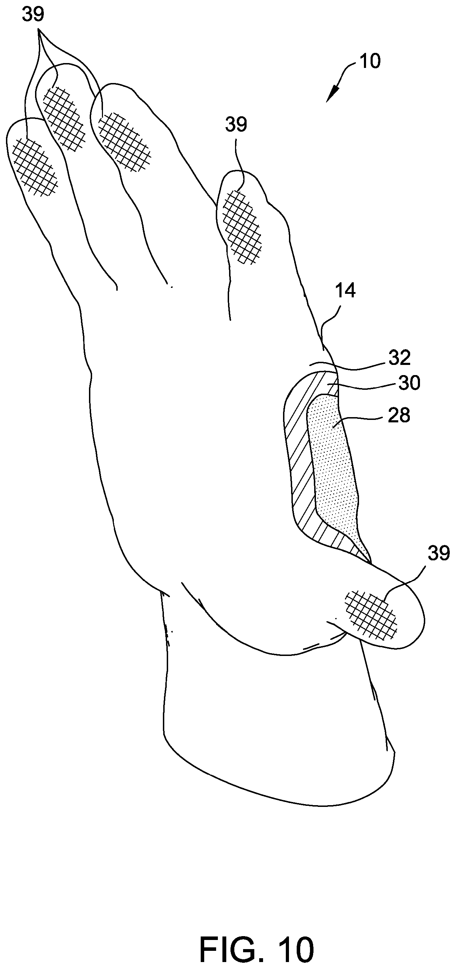

Texturing the hand-shaped former 34 facilitates improving the wet and dry gripping ability of the gloves 10 formed thereon. The texturing may be achieved by embossing, divoting, flexible casting, and the like. In one suitable embodiment, the hand-shaped former 34 is textured to have a patterned area 38 on select areas of the mold, such as on the fingertips 40 of the hand-shaped former 34. Alternatively, the patterned area 38 may be provided on other areas of the mold to provide texturing over the whole, or part, of other regions of the glove, such as the finger region 18 and the palm region 20. As will be described in more detail below, the glove 10 formed on each hand-shaped former 34 is stripped and inverted to remove the glove 10 from the hand-shaped former 34. Thus, as illustrated in FIG. 10, texturing the hand-shaped former 34 facilitates defining a corresponding patterned area 39 on the former-facing layer (i.e., the outer layer 32) of the glove 10 during fabrication.

The patterned area 39 may include any suitable texturing that facilitates improving the grip of the glove 10. The texturing may be defined by any suitable geometric shapes, non-geometric shapes, or combinations thereof. For example, as illustrated in FIG. 13, the patterned area 39 is defined by a plurality of shapes 42 having a diamond configuration formed in the outer layer 32 of the glove 10. Adjacent shapes 42 are spaced from each other by a distance D, and the distance D may be any suitable distance for improving the grip of the glove 10. The spacing between adjacent shapes 10 is illustrated as being substantially equidistant. However, the shapes 42 may be spaced from each other by irregular distances D as well. In addition, the shapes 42 may be formed as indents recessed relative to a surface 44 of the outer layer 32, or as ridges that are raised relative to the surface 44 of the outer layer 32.

Turning to FIG. 12, the hand-shaped former 34 is fabricated from material such that at least a surface 46 of the hand-shaped former 34 is colored to provide a contrasting visual appearance with the layers of elastomeric material to be formed thereon. Typically, hand-shaped formers 34 commonly fabricated from ceramic material have a substantially white visual appearance. When subsequent layers of elastomeric material having the same color as the hand-shaped former 34 are formed thereon, it becomes increasingly difficult to visually inspect the glove 10 and/or to readily determine if the glove 10 is defective. In the illustrated embodiment, the surface 46 of the hand-shaped former 34 is a first color 48, as illustrated by a first pattern, that provides a contrasting visual appearance with layers of the glove 10 for rapid on-line inspection of the gloves 10 for defects.

In addition, each layer 28, 30, and 32 of elastomeric material formed on the hand-shaped former 34 may likewise be colored to provide a contrasting visual appearance with the hand-shaped former 34, and/or with the other layers included in the glove body 14. In the illustrated embodiment, the body-facing layer 28 is a second color 50, the middle layer 30 is a third color 52, and the outer layer 32 is a fourth color 54, each illustrated by contrasting patterns in FIG. 13. In one suitable embodiment, the first color 48, the second color 50, the third color 52, and the fourth color 54 are each different contrasting colors. Alternatively, the second color 50, the third color 52, and the fourth color 54 of the layers 28, 30, and 32 are the same color, which is different than the first color 48 of the hand-shaped former 34. Further alternatively, the second color 50 and the fourth color 54 are the same color, and the third color 52 is different than the second color 50 and the fourth color 54. As such, the contrasting colors facilitate providing a visual indication of a potential defect on the manufacturing line, or of wear and tear during use of the glove 10.

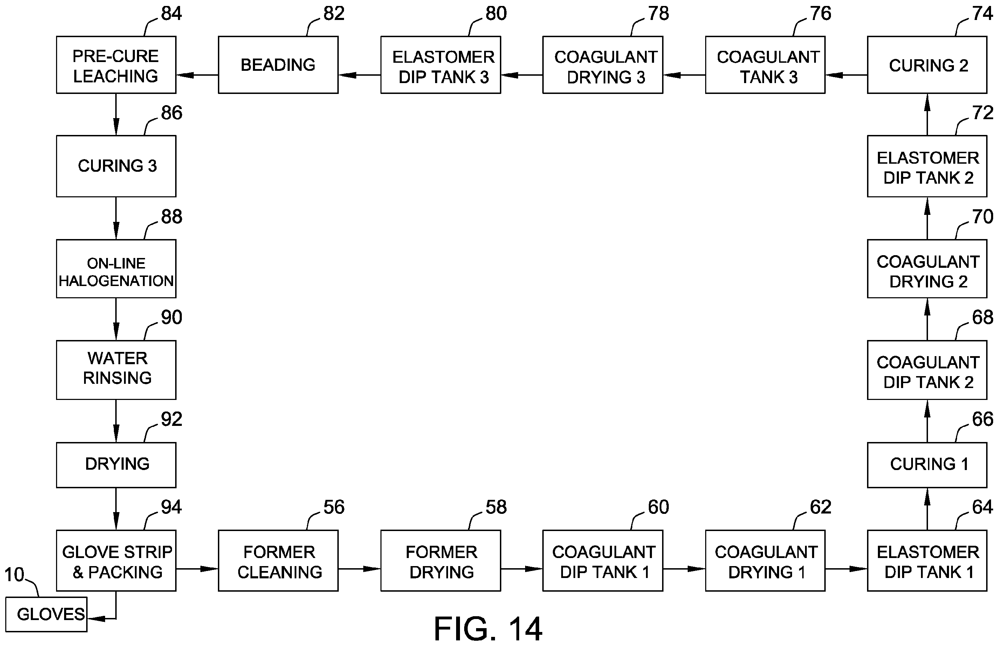

Turning to FIG. 14, an exemplary dipping process for forming the glove 10 is described herein, though other processes may be employed to form various articles having different shapes and characteristics.

In the illustrated embodiment, the hand-shaped former 34 (shown in FIG. 11) is cleaned 56 prior to formation of a glove on the hand-shaped former 34. The cleaning process generally includes an optional water pre-rinse followed by an acid wash. After the acid wash, the hand-shaped former 34 is mechanically scrubbed with a brush, for example, and then rinsed with water and submerged in a heated caustic solution prior to a final rinse. After the optional cleaning process, the hand-shaped former 34 is dried 58 in preparation for forming a glove on the hand-shaped former 34 through a series of dipping and drying steps.

For example, in one suitable embodiment, after the cleaning 56, the hand-shaped former 34 is dipped into a powder-free coagulant composition in a first coagulant dip tank 60. In general, the coagulant composition causes a base polymer, which will form a substrate body of the glove 10, to coagulate and polymerize on the hand-shaped former 34. Coagulants that may be used in the present disclosure may include a solution of a coagulant salt such as a metal salt. Examples of coagulants may include but are not limited to water soluble salts of calcium, zinc, aluminum, and the like. For example, in one embodiment, calcium nitrate in water or alcohol may be used in the coagulant composition. In some embodiments, calcium nitrate may be present in the solution in an amount of up to about 40% by weight although a greater or lesser amount may also be used. Optionally, the coagulant composition may also contain additives such as surfactants.

After being immersed in the coagulant composition, the hand-shaped former 34 is withdrawn from the first coagulant dip tank 60 and the coagulant present on the surface of the former is allowed to dry in a first coagulant drying step 62. For many applications, the coagulant may be air dried for a time of from about one minute to about two minutes. Once dried, a residual coating of the coagulant remains on the hand-shaped former 34.

If desired, the coagulant composition may optionally contain certain additives. For example, the coagulant composition may contain various additives which may improve the tactile characteristics of a surface of the glove. Alternatively, the coagulant composition may contain certain release aids which, when combined with the processes of the present invention, may further improve the stripping ability of the glove 10 from the hand-shaped former 34. In any case, coagulant composition additives should not hinder the processes of the present invention.

After the first coagulant drying step 62 is complete, the hand-shaped former 34 is dipped into a first elastomer dip tank 64 containing a first elastomeric material. The first elastomeric material is a composition that coincides with the material for forming the outer layer 32, as described above. The first elastomeric material may also contain various additives such as pH adjustors, stabilizers, and the like as are generally known in the art. Upon contact of the first elastomeric material with the coagulant composition, the coagulant may cause some of the first elastomeric material to become locally unstable and coagulate on the surface of the hand-shaped former 34. In many applications, the coagulant itself does not form a separate layer of the final glove, but rather becomes a part of the outer layer 32 of the glove 10. Any additives in the coagulant composition may, depending upon what they are, remain between the hand-shaped former 34 and the outer layer 32, or alternatively may be incorporated into the outer layer 32. After the desired amount of time, the hand-shaped former 34 is withdrawn from the first elastomer dip tank 64, and the coagulated layer of elastomeric material is allowed to coalesce fully on the former.

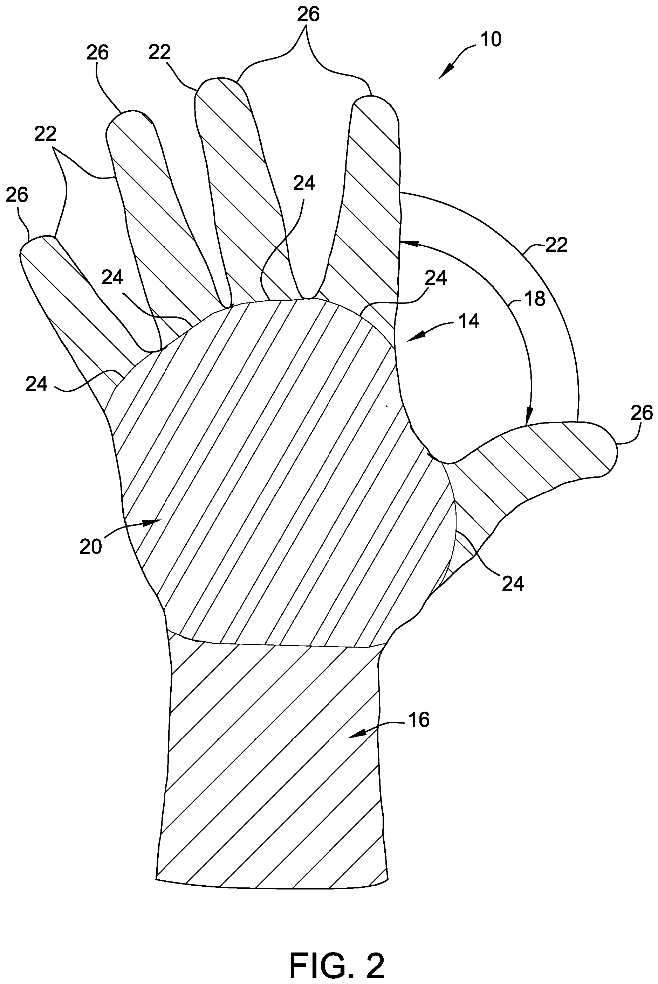

The amount of time the hand-shaped former 34 is immersed (commonly termed as dwell time) in the first elastomeric material determines the thickness of the outer layer 32. Increasing the dwell time of the hand-shaped former 34 in the first elastomeric material causes the thickness of the outer layer 32 (shown in FIG. 2) to increase. The total thickness of the glove body 14 may depend on other parameters as well, including, for example, the solids content of the latex emulsion and the additive content of the latex emulsion and/or the coagulant composition. In the illustrated embodiment, the dwell time of the hand-shaped former 34 within the first elastomer dip tank 64 is selected to define the thickness T₃, T₆, and T₉ (shown in FIGS. 7-9) of the outer layer 32 in accordance with the parameters noted above.

Once the hand-shaped former 34 is removed from the first elastomeric material, the outer layer 32 formed thereon may be, optionally, at least partially cured 66 in preparation for the hand-shaped former 34 receiving subsequent layers, such as the middle layer 30 and the body-facing layer 28 (both shown in FIG. 2), thereon. The process steps for forming the middle layer 30 and the body-facing layer 28 on the hand-shaped former 34 is generally the same as the process steps for forming the outer layer 32 thereon. For example, after the optional curing 66, the hand-shaped former 34 with the outer layer 32 formed thereon is dipped into a coagulant composition in a second coagulant dip tank 68, the coagulant composition is allowed to dry in a second coagulant drying step 70, and the hand-shaped former 34 is dipped into a second elastomer dip tank 72 containing a second elastomeric material. The second elastomeric material is a composition that coincides with the material for forming the middle layer 30, as described above.

The hand-shaped former 34 is then removed from the second elastomeric material, and the middle layer 30 formed thereon may be, optionally, at least partially cured 74. The hand-shaped former 34 with the outer layer 32 and the middle layer 30 formed thereon is dipped into a coagulant composition in a third coagulant dip tank 76, the coagulant composition is allowed to dry in a third coagulant drying step 78, and the hand-shaped former 34 is dipped into a third elastomer dip tank 80 containing a third elastomeric material. The third elastomeric material is a composition that coincides with the material for forming the body-facing layer 28, as described above. Specific process details, examples, and additive options, for example, described in the context of formation of the outer layer 32 on the hand-shaped former 34 are described in detail above. However, it should be understood that the process details, examples, and additive options are also applicable in the formation of the middle layer 30 and the body-facing layer 28 on the hand-shaped former 34.

Once removed from the third elastomer dip tank 80, the glove 10 is beaded 82 to facilitate defining the cuff region 16 of the glove, and to facilitate stripping of the glove 10 from the hand-shaped former 34. The glove 10 may then be further processed, as desired. For example, various pre-cure processing techniques are generally known in the art. For example, the uncured body-facing layer 28 may be leached 84 with flowing hot water. The leaching process may extract various emulsion constituents, such as salts and water, for example, from the coalesced elastomeric material. This may cause the glove body 14 to shrink somewhat on the hand-shaped former 34 and remove impurities from the coalesced emulsion.

The outer layer 32, middle layer 30, and body-facing layer 28 may then be cured 86, or vulcanized, to form the glove body 14. In general, the elastomeric materials are cured by high temperature reaction with a vulcanizing agent, such as sulfur, to cause cross-linking of the polymer chains. Curing 86 may generally take place at temperatures of between about 93,3° C (200° F) and about 148.9°C (300° F). In addition to curing the elastomeric materials, the high temperature process may cause the evaporation of any volatile components remaining on the hand-shaped former 34, including any water remaining in the emulsion. Therefore, the curing process 66 may cause shrinkage in the glove body 14 and the thickness of the cured elastomeric layers may generally be less than the thickness of the emulsions coalesced on the hand-shaped former 34.

After the elastomeric materials have been cured, additional processing steps may be performed. For example, the surface of the glove may be chemically treated following the curing, such as in a halogenation process 88. Halogenation processes 88 such as chlorination are known in the art and have been used for various purposes, such as for reducing the tackiness on the surface of a nitrile rubber article. In one embodiment, a halogenation process 88 includes injecting a halogen gas, such as chlorine gas, for example, into water and then dipping the hand-shaped former 34 into the halogenated water. Other known methods of chlorinating the glove can alternatively be used, however.

For example, in one suitable embodiment, the halogenation process 88 includes contacting the glove 10 with bromine gas rather than chlorine gas. Use of the bromine gas in the halogenation process 88 facilitates reducing discoloration of the glove 10, and is potentially safer to process and utilize in the glove manufacturing process.

After the glove is cured and any post-cure processing steps have been completed, the glove body 14 on the hand-shaped former is rinsed 90 with water, such as in a water bath, and then dried 92 prior to stripping 94 the article from the hand-shaped former 34. For most applications, the gloves 10 may be dried 92 while still on the hand-shaped former 34 prior to stripping. Alternatively, however, in some applications, it may also be possible to strip the glove body 14 from the hand-shaped formers 34 while wet and then dry the articles later.

When drying 92 the articles prior to stripping 94, the gloves 10 while still on the formers may be dried by applying heat to the gloves 10. For instance, the gloves 10 while on the hand-shaped formers 34 may be contacted with hot air, such as in a convective oven. For example, in one embodiment, the hand-shaped formers 34 may be transferred from the liquid bath to an oven to be dried.

In the oven, convective air at a high temperature may dry the film and remove any residual moisture. For example, convective air at a temperature of between about 121.1° C (250° F)and about 135° C (275° F) may be used to dry the hand-shaped formers 34. In this temperature range, the drying process may be very fast, for example, the gloves 10 may be dried in the oven for about 3 minutes. In one embodiment, the gloves 10 may be dried in the oven in about one minute. In another embodiment, the gloves 10 may be dried in the oven for less than about one minute.

In an embodiment wherein the gloves 10 are dried while still on the hand-shaped formers 34, the gloves 10 may optionally be cooled after the residual moisture is removed and then stripped 94 from the hand-shaped formers 34. The gloves 10 may be cooled either actively (e.g., subjecting the formers to a cool air stream) or passively, or a combination of both as by merely removal from the oven and cooled for period in ambient air. In one embodiment, the gloves 10 may be cooled to a temperature of less than about 37.8° C (100° F). Once dried and cooled, the gloves 10 are stripped and packaged 94 from the hand-shaped formers 34. The hand-shaped formers 34 may then be re-used to fabricate additional gloves 10.

Referring again to FIG. 11, in the illustrated embodiment, the hand-shaped formers 34 are each outfitted with a radio-frequency identification (RFID) system 96. The RFID system 96 facilitates monitoring the steps and/or parameters of the process for fabricating the glove 10, such as those illustrated in FIG. 14. For example, the RFID system 96 counts of a number of cycles undergone by each hand-shaped former 34 upon initial engagement of the former cleaning step 56. Counting the number of cycles facilitates tracking the usage of each hand-shaped former 34 to facilitate inspection and/or refurbishment of the hand-shaped former 34. The RFID system 96 may also monitor the pH on the surface 46 (shown in FIG. 12) of the hand-shaped former 34 in one or more of the illustrated process steps, such as the cleaning step 56 and the elastomer dipping steps 64, 72, and 80. Monitoring the pH on the surface 46 ensures there is no material buildup on the hand-shaped former 34 in the cleaning step 56, and ensures there is low webbing and no bubble formation in the dipping steps 64, 72, and 80.

The RFID system 96 may also monitor the temperature on the surface 46 of the hand-shaped former 34 in one or more of the illustrated process steps, such as the drying step 58, the coagulating drying steps 62, 70, and 78, and the curing steps 66, 74, and 86. Monitoring the temperature on the surface 46 facilitates determining whether the surface 46 is dry as a result of each cleaning step. Monitoring the temperature also ensures that the hand-shaped former 34 has spent enough time at a predetermined curing temperature to adequately cure the layers 28, 30, and 32 on the hand-shaped former 34. In the beading step 82, the RFID system 96 may also measure a length from a bead position to a fingertip of the middle finger on the glove 10 to verify the glove length. The RFID system 96 may also measure the bead thickness on the hand-shaped former 34.

The terms "comprising," "including", and "having" are intended to be inclusive and mean that there may be additional elements other than the listed elements.

As various changes could be made in the above constructions without departing from the scope of the invention and the claims, it is intended that all matter contained in the above description or shown in the accompanying drawings shall be interpreted as illustrative and not in a limiting sense.

## Claims

1. An elastomeric glove (10) comprising:
a body-facing layer (28) of a first elastomeric material;
a middle layer (30) of a second elastomeric material; and
an outer layer (32) of a third elastomeric material different than the second elastomeric material,
wherein the third elastomeric material has an acrylonitrile content greater than both the first elastomeric material and the second elastomeric material,
wherein the elastomeric glove comprises a cuff region (16), a finger region (18), and a palm region (20),
**characterized in that**,
the body-facing (28), middle (30), and outer layers (32) of material have a combined thickness of less than 0.19 millimeters in the palm region (20) of the elastomeric glove (10), and
wherein the third elastomeric material has an acrylonitrile content of between 30 and 50 percent by weight.

2. The elastomeric glove (10) of claim 1, wherein the first elastomeric material is accelerator-free.

3. The elastomeric glove (10) of claim 1, wherein the first elastomeric material comprises neoprene, nitrile, butyl, elastane, or isoprene.

4. The elastomeric glove (10) of claim 1, wherein the second elastomeric material comprises natural rubber latex, neoprene, polyurethane, or butyl.

5. The elastomeric glove (10) of claim 1, wherein the elastomeric glove has a length equal to or greater than about 40.6 cm (about 16 inches).

6. The elastomeric glove (10) of claim 1, wherein
the body-facing layer (28) is an accelerator-free elastomeric material;
the middle layer (30) is a natural rubber latex material; and
wherein the middle layer (30) has a greater average thickness than each of the body-facing layer (28) and the outer layer (32).

7. The elastomeric glove (10) of claim 6, wherein the elastomeric glove is powder-free.

8. The elastomeric glove (10) of claim 6, wherein the body-facing layer (28) and the outer layer (32) each contain less than about 50 micrograms/gram of protein.

9. A method of fabricating the elastomeric glove (10) of claim 1, the method comprising:
dipping a hand-shaped former (34) into a first dip tank (64) containing the third elastomeric material, such that a first layer of the third elastomeric material is formed on the hand-shaped former;
dipping the hand-shaped former (34) into a second dip tank (72) containing a second elastomeric material, such that a second layer of the second elastomeric material is formed over the first layer; and
dipping the hand-shaped former (34) into a third dip tank (80) containing the first elastomeric material, such that a third layer of the first elastomeric material is formed over the second layer;
wherein the elastomeric glove (10) is stripped from the former and inverted such that the first elastomeric material defines the interior of the elastomeric glove (10).

10. The method of claim 9 further comprising dipping the hand-shaped former into a coagulant dip tank (60, 68, 76), containing a coagulant composition, prior to dipping the hand-shaped former into each of the first (64), second (72), and third dip tanks (80).

11. The method of claim 9, wherein dipping the hand-shaped former into the third dip tank (80) comprises dipping the hand-shaped former into the third dip tank (80) containing the first elastomeric material that is accelerator-free.

## Patentansprüche

1. Elastomerhandschuh (10), umfassend:
eine dem Körper zugewandte Schicht (28) aus einem ersten Elastomermaterial;
eine mittlere Schicht (30) aus einem zweiten Elastomermaterial; und
eine äußere Schicht (32) aus einem dritten Elastomermaterial, das sich von dem zweiten Elastomermaterial unterscheidet,
wobei das dritte Elastomermaterial einen höheren Acrylnitrilgehalt aufweist als sowohl das erste Elastomermaterial als auch das zweite Elastomermaterial,
wobei der Elastomerhandschuh einen Stulpenbereich (16), einen Fingerbereich (18) und einen Handflächenbereich (20) umfasst,
**dadurch gekennzeichnet, dass**
die dem Körper zugewandte (28), mittlere (30) und äußere Materialschicht (32) in dem Handflächenbereich (20) des Elastomerhandschuhs (10) eine Gesamtdicke von weniger als 0,19 Millimetern aufweisen, und
wobei das dritte Elastomermaterial einen Acrylnitrilgehalt zwischen 30 und 50 Gewichtsprozent aufweist.

2. Elastomerhandschuh (10) nach Anspruch 1, wobei das erste Elastomermaterial beschleunigerfrei ist.

3. Elastomerhandschuh (10) nach Anspruch 1, wobei das erste Elastomermaterial Neopren, Nitril, Butyl, Elastan oder Isopren umfasst.

4. Elastomerhandschuh (10) nach Anspruch 1, wobei das zweite Elastomermaterial Naturkautschuklatex, Neopren, Polyurethan oder Butyl umfasst.

5. Elastomerhandschuh (10) nach Anspruch 1, wobei der Elastomerhandschuh eine Länge gleich oder größer als etwa 40,6 cm (etwa 16 Zoll) aufweist.

6. Elastomerhandschuh (10) nach Anspruch 1, wobei
die dem Körper zugewandte Schicht (28) ein beschleunigerfreies Elastomermaterial ist;
die mittlere Schicht (30) ein Naturkautschuklatexmaterial ist; und
wobei die mittlere Schicht (30) eine größere Durchschnittsdicke aufweist als die dem Körper zugewandte Schicht (28) und die äußere Schicht (32).

7. Elastomerhandschuh (10) nach Anspruch 6, wobei der Elastomerhandschuh puderfrei ist.

8. Elastomerhandschuh (10) nach Anspruch 6, wobei die dem Körper zugewandte Schicht (28) und die äußere Schicht (32) jeweils weniger als etwa 50 Mikrogramm/Gramm Protein enthalten.

9. Verfahren zum Herstellen des Elastomerhandschuhs (10) nach Anspruch 1, wobei das Verfahren Folgendes umfasst:
Eintauchen eines handförmigen Formers (34) in ein erstes Tauchbecken (64), das das dritte Elastomermaterial enthält, so dass eine erste Schicht des dritten Elastomermaterials auf dem handförmigen Former gebildet wird;
Eintauchen des handförmigen Formers (34) in ein zweites Tauchbecken (72), das ein zweites Elastomermaterial enthält, so dass eine zweite Schicht des zweiten Elastomermaterials über der ersten Schicht gebildet wird; und
Eintauchen des handförmigen Formers (34) in ein drittes Tauchbecken (80), das das erste Elastomermaterial enthält, so dass eine dritte Schicht des ersten Elastomermaterials über der zweiten Schicht gebildet wird;
wobei der Elastomerhandschuh (10) von dem Former abgezogen und umgestülpt wird, so dass das erste Elastomermaterial das Innere des Elastomerhandschuhs (10) definiert.

10. Verfahren nach Anspruch 9, das weiter Eintauchen des handförmigen Formers in ein Gerinnungsmitteltauchbecken (60, 68, 76) umfasst, das eine Gerinnungsmittelzusammensetzung enthält, bevor der handförmige Former in jedes des ersten (64), zweiten (72) und dritten Tauchbeckens (80) eingetaucht wird.

11. Verfahren nach Anspruch 9, wobei Eintauchen des handförmigen Formers in das dritte Tauchbecken (80) Eintauchen des handförmigen Formers in das dritte Tauchbecken (80) umfasst, das das erste Elastomermaterial enthält, das beschleunigerfrei ist.

## Revendications

1. Gant élastomère (10) comprenant :
une couche tournée vers le corps (28) d'une première matière élastomère ;
une couche intermédiaire (30) d'une deuxième matière élastomère ; et
une couche extérieure (32) d'une troisième matière élastomère, différente de la deuxième matière élastomère,
dans lequel la troisième matière élastomère présente une teneur en acrylonitrile supérieure à la fois à celle de la première matière élastomère et à la celle de la deuxième matière élastomère,
dans lequel le gant élastomère comprend une région de poignet (16), une région de doigts (18) et une région de paume (20),
**caractérisé en ce que**,
la couche tournée vers le corps (28), la couche intermédiaire (30) et la couche extérieure (32) de matière présentent une épaisseur combinée inférieure à 0,19 millimètre dans la région de paume (20) du gant élastomère (10), et
dans lequel la troisième matière élastomère présente une teneur en acrylonitrile comprise entre 30 et 50 pour cent en poids.

2. Gant élastomère (10) selon la revendication 1, dans lequel la première matière élastomère est exempte d'accélérateur.

3. Gant élastomère (10) selon la revendication 1, dans lequel la première matière élastomère comprend du néoprène, du nitrile, du butyle, de l'élasthanne ou de l'isoprène.

4. Gant élastomère (10) selon la revendication 1, dans lequel la deuxième matière élastomère comprend du latex de caoutchouc naturel, du néoprène, du polyuréthane ou du butyle.

5. Gant élastomère (10) selon la revendication 1, dans lequel le gant élastomère présente une longueur supérieure ou égale à environ 40,6 cm (environ 16 pouces).

6. Gant élastomère (10) selon la revendication 1, dans lequel
la couche tournée vers le corps (28) est une matière élastomère exempte d'accélérateur ;
la couche intermédiaire (30) est une matière en latex de caoutchouc naturel ; et
dans lequel la couche intermédiaire (30) présente une épaisseur moyenne supérieure à celle de chacune de la couche tournée vers le corps (28) et de la couche extérieure (32).

7. Gant élastomère (10) selon la revendication 6, dans lequel le gant élastomère est non poudré.

8. Gant élastomère (10) selon la revendication 6, dans lequel la couche tournée vers le corps (28) et la couche extérieure (32) contiennent chacune moins d'environ 50 microgrammes/g de protéine.

9. Procédé de fabrication du gant élastomère (10) selon la revendication 1, le procédé comprenant :
l'immersion d'un gabarit en forme de main (34) dans une première cuve d'immersion (64) contenant la troisième matière élastomère, de sorte qu'une première couche de la troisième matière élastomère soit formée sur le gabarit en forme de main ;
l'immersion du gabarit en forme de main (34) dans une deuxième cuve d'immersion (72) contenant une deuxième matière élastomère, de sorte qu'une deuxième couche de la deuxième matière élastomère soit formée sur la première couche ; et
l'immersion du gabarit en forme de main (34) dans une troisième cuve d'immersion (80) contenant la première matière élastomère, de sorte qu'une troisième couche de la première matière élastomère soit formée sur la deuxième couche ;
dans lequel le gant élastomère (10) est enlevé du gabarit et retourné de sorte que la première matière élastomère définisse l'intérieur du gant élastomère (10).

10. Procédé selon la revendication 9 comprenant en outre l'immersion du gabarit en forme de main dans une cuve d'immersion de coagulant (60, 68, 76), contenant une composition coagulante, avant d'immerger le gabarit en forme de main dans chacune de la première cuve d'immersion (64), la deuxième cuve d'immersion (72) et la troisième cuve d'immersion (80).

11. Procédé selon la revendication 9, dans lequel l'immersion du gabarit en forme de main dans la troisième cuve d'immersion (80) comprend l'immersion du gabarit en forme de main dans la troisième cuve d'immersion (80) contenant la première matière élastomère qui est exempte d'accélérateur.
